# EUROPÄISCHE PATENTSCHRIFT

(11) **EP 0 592 703 B1**
(45) Veröffentlichungstag und Bekanntmachung des Hinweises auf die Patenterteilung: **27.09.1995**
(21) Anmeldenummer: 92117412.4
(22) Anmeldetag: 12.10.1992
(51) Int. Cl.: A61G 15/14, F16M 11/04

(54) **Parallelogrammtragarm mit Federgewichtsausgleich**
Parallelogram supporting arm with counterbalancing spring means
Bras de support en forme de parallilogramme avec système d'équilibrage à ressort

(43) Veröffentlichungstag der Anmeldung: 20.04.1994
(73) Patentinhaber: SIEMENS AKTIENGESELLSCHAFT, 80333 München (DE)
(72) Erfinder: Lehmann, Karl-Heinz, Dipl.-Ing. (FH), W-6148 Heppenheim (DE); Moritz, Günther, W-6840 Lampertheim (DE)

(56) Entgegenhaltungen:
- EP-A- 0 415 891
- DE-A- 2 060 278
- US-A- 3 524 676

## Beschreibung

Die Erfindung betrifft einen Parallelogrammtragarm mit Federgewichtsausgleich, wie er beispielsweise in der zahnmedizinischen Technik zur Höhenverstellung von Instrumententischen, Speischalen oder anderen Gerätschaften vorgesehen wird. Ein solches Anwendungsbeispiel ergibt sich aus DE-2 060 278. Der Parallelogrammtragarm dient dort als Träger für eine Speifontäne mit Instrumentenhalterung für die Helferin. Der Parallelogrammtragarm ist an einem Ständer gehaltert, und zwar so, daß er aus einer im wesentlichen aufrechten Stellung in vertikaler Ebene geneigt werden kann. Außerdem kann der Parallelogrammtragarm noch um eine vertikale Achse geschwenkt werden. Hierzu ist das bodenseitige Ende des Parallelogrammtragarms an einem Ausleger befestigt, der wiederum um die vorgenannte Vertikalachse am benachbarten Geräteständer angelenkt ist.

Obgleich der Aufbau des Parallelogrammtragarmes aus dem genannten Dokument nicht ersichtlich ist, wird der prinzipielle Aufbau eines Parallelogrammtragarms mit Federgewichtsausgleich als bekannt vorausgesetzt. In der Regel werden zur Gewichtskompensation Druck- oder Zugfedern verwendet, die diagonal zwischen zwei Gelenkpunkten des Gelenkviereckes des Parallelogrammtragarmes angreifen.

Zur Abstimmung der Gewichtskompensation wird die Feder bei der Montage auf die zu tragende Last eingestellt.

Diese Einstellung bleibt dann erhalten. Parallelogrammarme dieser Art können nur von Hand verstellt werden.

Aus US-PS 3 524 676 ist ein Parallelogrammtragarm ohne Gewichtskompensation bekannt. Bei diesem wird ein Parallelogrammgestänge als Träger eines zahnärztlichen Instrumententisches hydraulisch verstellt; eine manuelle Verstellung von Hand ist hier nicht möglich.

Der im Anspruch 1 angegebenen Erfindung liegt die Aufgabe zugrunde, einen Parallelogrammtragarm mit Federgewichtsausgleich anzugeben, der sich universell verstellen läßt.

Das nachfolgend näher beschriebene Tragarmsystem dient in erster Linie zur Aufnahme eines Arzt- oder Helferin-Elements. Nachdem der motorische Antrieb über eine Putschkupplung mit den Bewegungselementen verbunden ist, lassen diese sich sowohl getrennt als auch gemeinsam verfahren. Daraus resultiert ein Bewegungsablauf, der beispielsweise elektrisch oder mechanisch oder in Kombination erfolgen kann. Die motorische Bewegung kann an die Behandlungsposition gekoppelt sein und über Fußschalter oder ein Bedienpaneel abgerufen werden.

In vorteilhafter Ausgestaltung der Erfindung kann das zu tragende Gerät über zwei Drehmechanismen, die sich innerhalb der Umrisse der Gelenkanordnung des Parallelogrammtragarmes befinden, in horizontaler Ebene verstellt und innerhalb bestimmter Begrenzungsanschläge in jede beliebige Position gebracht werden, und zwar sowohl von Hand als auch motorisch. Zur motorischen Verstellung des Tragarmes dienen zwei Rotations- und ein Linearantrieb. Die Kraftübertragung erfolgt vorteilhafterweise über ein Stirnrad- und Planetenradgetriebe für die Drehbewegung sowie über einen Schneckenantrieb für die Hubbewegung. Vorteilhafterweise sind die beiden Drehsysteme baugleich ausgeführt, wodurch eine kostensparende Fertigung erzielt wird.

Die Erfindung wird nachfolgend anhand eines Ausführungsbeispieles näher beschrieben.
Es zeigen:
Figur 1 eine Prinzipdarstellung eines möglichen Anwendungsfalles des erfindungsgemäßen Parallelogrammtragarmes,
Figur 2 die äußeren Verkleidungsteile des erfindungsgemäßen Tragarmes,
Figuren 3A, 3B, 3C Einzelteile des erfindungsgemäßen Tragarmes in einer Explosionsdarstellung,

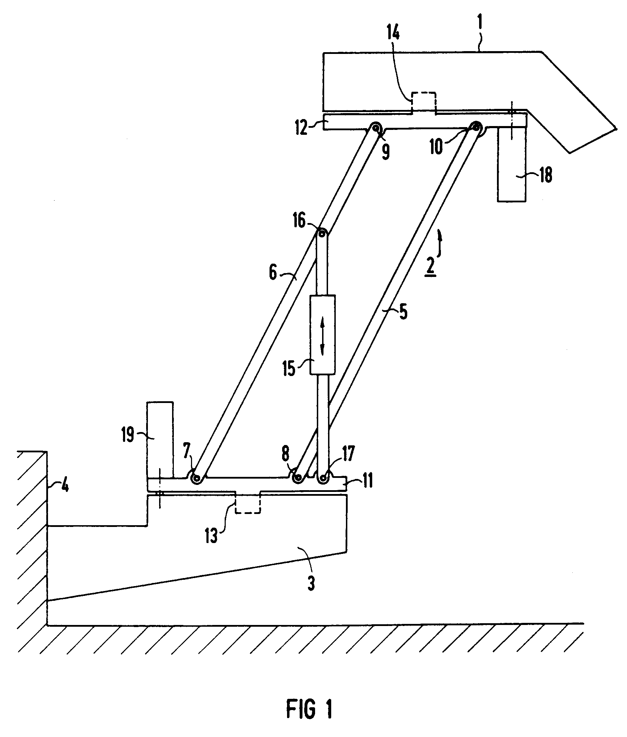

Die Figur 1 zeigt in einer schematischen Darstellung ein zahnärztliches, allgemein mit 1 bezeichnetes Gerät, welches mittels eines Parallelogrammtragarmes 2 an einem bodenseitigen Basisteil 3 schwenkbar und drehbar gehaltert ist. Das Basisteil 3 kann mit Vorteil an einem zahnärztlichen, mit der Position 4 angedeuteten Patientenstuhl angeflanscht sein. Die beiden Parallelogrammarme 5 und 6 sind über Gelenke 7, 8 und 9, 10 mit nachfolgend noch näher beschriebenen Anschlußteilen 11 und 12 verbunden. Das untere Anschlußteil 11 ist mittels einer vertikalen Achslagerung 13 schwenkbar am Basisteil 3 gelagert, während das Gerät 1 mittels einer weiteren vertikalen Achslagerung 14 schwenkbar am oberen Anschlußteil 12 gelagert ist. Zwischen den beiden Parallelogrammarmen 5 und 6 ist eine motorisch antreibbare Hubmechanik 15 vorgesehen, die über Gelenke 16, 17 einerseits am Tragarm 6 und andererseits an einer außerhalb der Umrisse der (vier) Gelenkpunkte 7, 8 (7', 8') gelegenen Stelle des Anschlußteiles 11 angelenkt ist. Die außerhalb der Gelenkpunkte angeordnete Anlenkung des Antriebs hat den Vorteil, daß sowohl die Baugröße als auch die vorzusehende Federkraft der Druckfeder minimiert werden kann. Die Antriebe für das Verschwenken des Gerätes sowie des gesamten Parallelogrammtragarmes um die vertikalen Achsen 13 und 14 sind mit 18 und 19 bezeichnet.

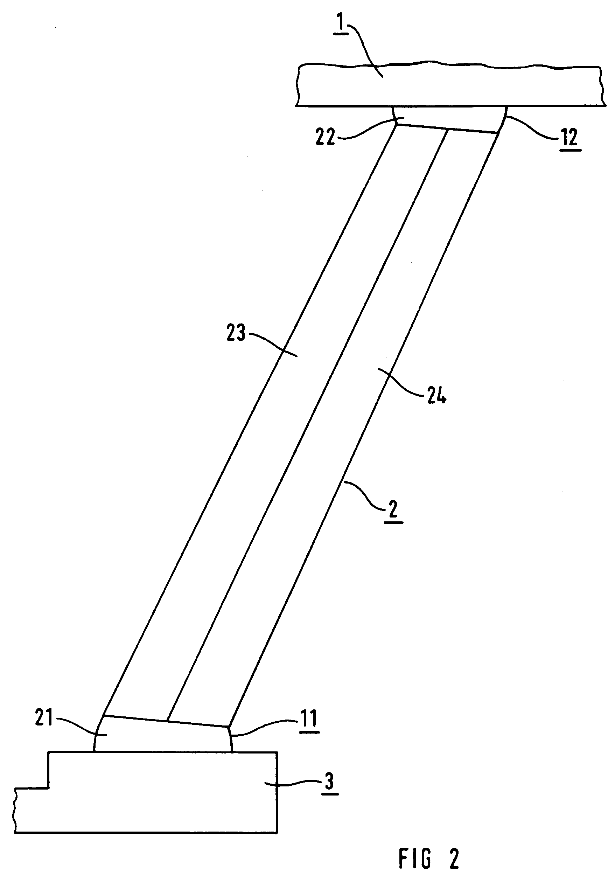

Die Figur 2 zeigt den äußeren Aufbau des Parallelogrammtragarmes 2. Die beiden Anschlußteile 11 und 12 weisen kugelkalottenförmige Gehäuse 21 und 22 auf, denen angepaßt aus zwei Halbschalen 23 und 24 gebildete rohrförmige, nach oben leicht konisch zulaufende Verkleidungsteile sind. Die beiden kalottenförmigen Gehäuseteile 21, 22 umschließen sowohl die Gelenke des Parallelogrammtragarmes als auch die beiden Drehlager.

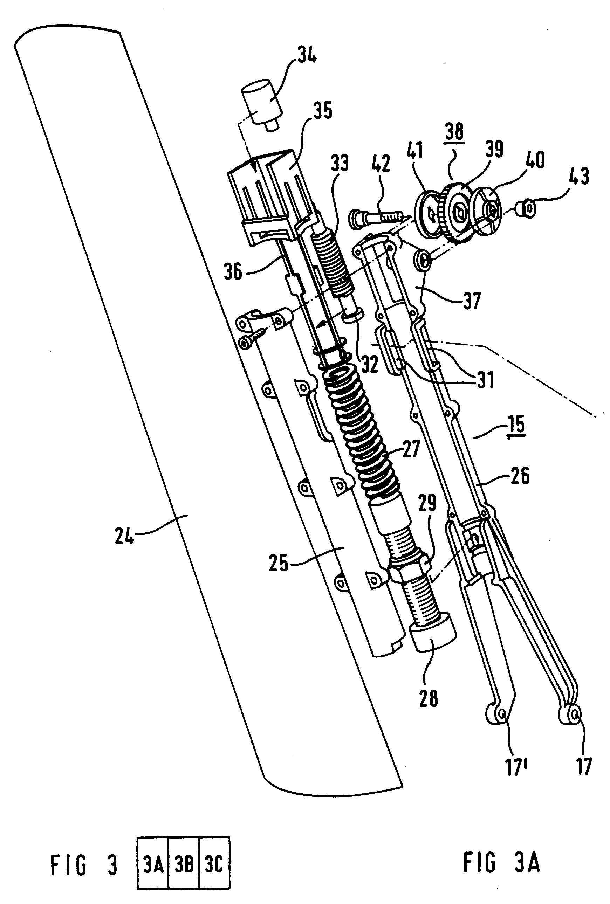

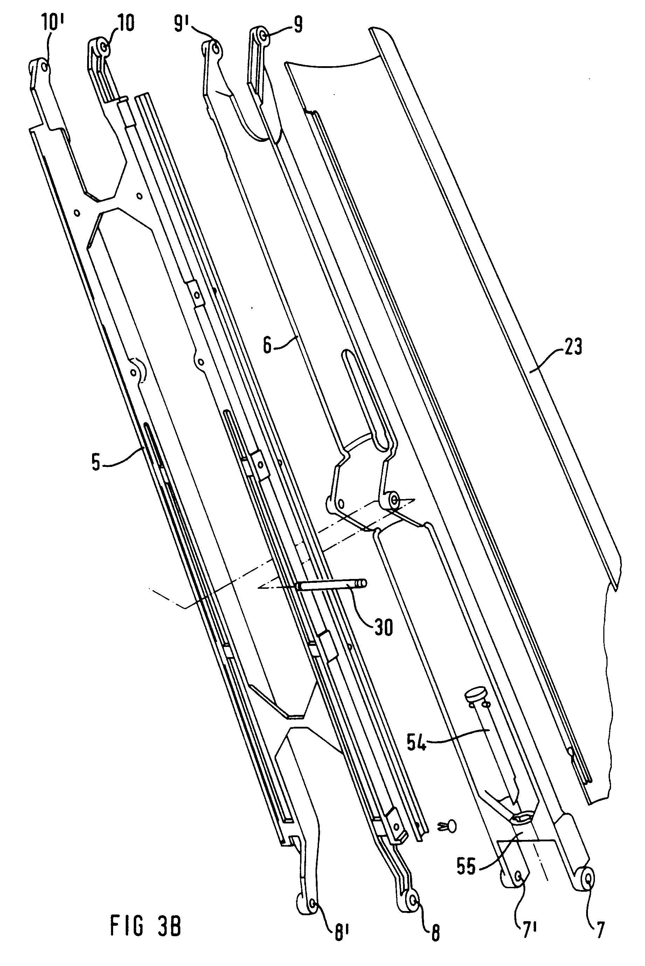

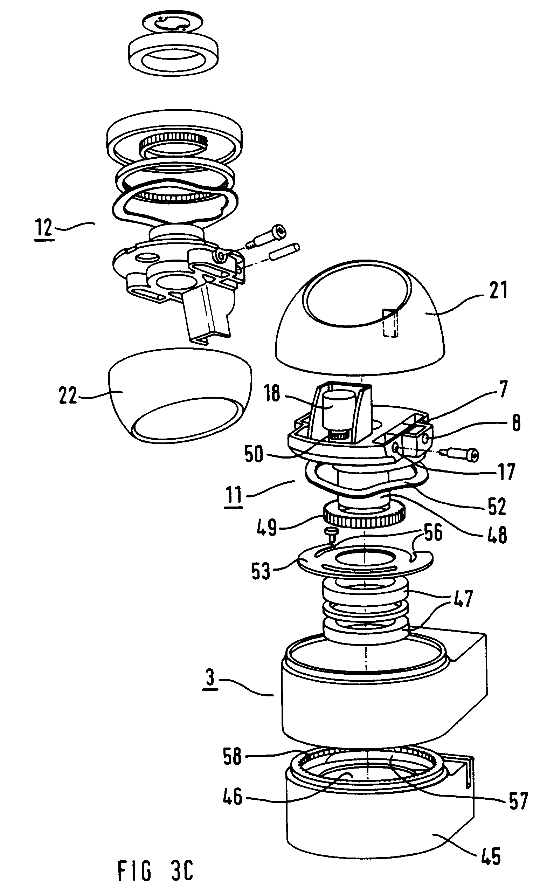

Die Figur 3 zeigt in den Abschnitten 3A, 3B, 3C den Innenaufbau des Parallelogrammtragarmes mit den beiden Anschlußteilen in einer Explosionsdarstellung.

Die Figur 3A läßt den Aufbau des Hubmechanismuses 15 erkennen.

Mit 25 und 26 sind zwei Federarmhälften bezeichnet, die im montierten Zustand einen zylindrischen Raum bilden, in dem eine Druckfeder 27 geführt ist. Das eine Ende der Druckfeder liegt über ein nicht näher bezeichnetes Zwischenstück an einer Stellschraube 28 an, deren mit ihr korrespondierende Mutter 29 in einer entsprechend ausgebildeten Ausnehmung der Gehäusehälfte 26 verdrehsicher gehaltert ist. Das andere Ende der Druckfeder 27 liegt an einem Widerlager in Form eines Querbolzens 30 (Fig. 3B) an, der, wie aus der strichpunktierten Linienführung ersichtlich, in der Zugstange 6 gelagert ist und im montierten Zustand durch zwei an der rechten Federarmhälfte 26 angeformte Längsführungen 31 hindurchgreift. An dem Widerlager 30 liegt der Stempel 32 einer Schnecke 33 an, die von einem Elektromotor 34 angetrieben wird. Schnecke 33 und Antriebsmotor 34 sind in einem kastenförmigen Gehäuse 35, der mit einer Längsführung 36 versehen ist, gehaltert.

Die Längsführung 31 dient gleichzeitig als Anschlag zur Begrenzung der Hubbewegung, was den Vorteil erbringt, daß die Kräfte in den Endlagen minimiert werden. Die Lagerstellen an den Anlenkpunkten 7 und 8 bzw. 7' bzw. 8' der Tragarme 5 und 6 werden dadurch weitgehend entlastet.

Im oberen Teil der rechten Federarmhälfte 26 ist eine Gehäuseausbuchtung 37 vorgesehen, in der ein Reibradgesperre 38 gelagert ist. Das Gesperre 38 wird gebildet aus einem Schneckenrad 39, welches im montierten Zustand mit der Schnecke 33 in Eingriff steht und zwei beidseitig mit Reibkraft anliegenden Scheiben 40 und 41. Die Reibkraft wird durch Verspannen der Scheiben mittels eines Lagerbolzens 42 und einer Spannmutter 43 erreicht. Das Schneckenrad 39 ist auf dem Lagerbolzen 42 an sich frei drehbar aufgesetzt; durch die beiden Scheiben 40 und 41, die mit einer definierten Anpreßkraft gegen die seitlichen Flächen des Schneckenrades drücken, wird es jedoch mit einer definierten Haltekraft festgehalten. Die Haltekraft ist dabei so bemessen, daß sich das Schneckenrad bei einer motorischen Verstellung der Schnecke nicht drehen kann, was zur Folge hat, daß sich das gesamte Antriebssystem, bestehend aus Motor 34, Schnecke 33 sowie Gehäuse 35 und Führung 36 in Achsrichtung bewegen kann. Je nach Drehrichtung des Motors 34 kann somit die Druckfeder 27 gespannt oder entspannt werden, wodurch sich die Haltekraft und damit die Höhenlage des Parallelogrammtragarmes verstellen läßt. Die Reibkraft, die auf das Schneckenrad 39 wirkt, ist so bemessen, daß eine Verstellung des Parallelogrammtragarmes sowohl von Hand als auch motorisch möglich ist. Im Falle einer Verstellung von Hand wird bei einem Neigen des Parallelogrammtragarmes das Schneckenrad 39 gedreht, wodurch sich dessen Verzahnung auf der (nicht drehenden und daher feststehenden) Schnecke abwälzen kann.

Die Figur 3C läßt den Aufbau der boden- und geräteseitigen Anschlußteile des Parallelogrammtragarmes erkennen.

Das Basisteil 3 enthält ein Gehäuseteil 45 mit einer zentralen Innenbohrung 46, in die Lager 47 zur drehbaren Lagerung eines Zapfens 48 eingesetzt sind. Der Zapfen 48 ist integraler Bestandteil des Anschlußteils 11, der, wie durch die Bezugshinweise ersichtlich, entsprechende Lager einerseits für die Gelenke 7 und 8 bzw. 7a, 8a und andererseits für die Anlenkung der Federgehäusehälfte 26 enthält. Auf dem Zapfen 48 ist lose, d.h. an sich frei drehbar, ein Zahnrad 49 aufgeschoben, welches im montierten Zustand mit einem Ritzel 50 des Antriebsmotors 18 in Eingriff steht. Die freie Drehbarkeit des Zahnrades 49 ist jedoch durch eine definierte Reibkraft eingeschränkt, welche durch Verspannen einer federnden Wellscheibe 52 erzielt wird. Die Reibkraft, die auf das Zahnrad 49 wirkt, ist - ähnlich wie bei dem Reibradgesperre 38 der Hubmechanik 15 - so eingestellt, daß bei einer motorischen Verstellung über den Antrieb 18 sich das Ritzel 50 an der Verzahnung 49 abwälzen kann, wodurch das Anschlußteil 11 gegenüber dem Gehäuse 45 gedreht wird. Bei Verstellung von Hand dagegen wird die Reibkraft überwunden, wodurch sich das Anschlußteil 11 mit dem Zapfen 48 gegenüber dem feststehenden Zahnrad 49 drehen läßt.

Das obere Anschlußteil 12 ist baugleich aufgebaut, so daß davon abgesehen wird, diese Teile zu bezeichnen und zu beschreiben.

Zwischen dem Zahnrad 49 und den Lagern 47 befindet sich eine Steuerscheibe 53, die mit einem Anschlagstift 54 zusammenwirkt, der in einer Buchse 55 des Zugstabes 6 geführt ist. Der Anschlagstift 54 begrenzt die Drehbarkeit des Parallelogrammtragarmes gegenüber dem Basisteil 3, und zwar in Abhängigkeit von der Höheneinstellung des Tragarmes. Hierzu enthält die Steuerscheibe 53 eine Steuerkurve 56, auf deren Bahn sich der Anschlagstift 54 in den Endlagen bei einer Höhenverstellung bewegt.

Die Steuerkurve 56 umschreibt in Verbindung mit einer Aussparung 57 im Gehäuse 45 des Basisteils 3 eine Hüllkurve, in deren durch die Steuerscheibe verstellbaren Grenzen sich der Tragarm bewegen läßt.

Das Gehäuseteil 45 enthält am Umfang eine Verzahnung 58, die mit einem nicht dargestellten Positionsmelder zusammenwirkt, mit dem der Drehwinkel zwischen Anschlußteil 11 und Basisteil 3 gemessen und als elektrischer Meßwert an eine Regelelektronik weitergegeben werden kann.

Die Wegerfassung, die für die Drehbewegung und analog für die Hubbewegung erfolgt, ermöglicht eine Programmierung des Tragarmsystems in verschiedenen Positionen. Dies kann auch analog zu einer Lagerungsposition des Patientenstuhles erfolgen. Damit könnten bestimmte Tragarmprogrammstellungen bestimmten Patientenstuhlprogrammstellungen zugeordnet werden, die z.B. durch eine gemeinsame Tastfunktion ausgelöst werden können.

Die beschriebene Tragarmkonstruktion ermöglicht mit Vorteil, die zu tragenden Geräte - z.B. Arzt- und Helferingerät - als eigenständige Einheiten auszubilden. Insbesondere durch die beiden, in vorteilhafter Weise angeordneten Drehlager läßt sich eine optimale Anpassung an die unterschiedlichen Behandlungspositionen erzielen, wobei es möglich ist, das Gerät in jeder Neigungslage des Tragarmes auf gleichen Abstand zum Patientenstuhl zu halten.

## Patentansprüche

1. Parallelogrammtragarm mit Federgewichtsausgleich, bei dem auf die Feder (27) ein motorisch angetriebenes Stellmittel (33 bis 36) einwirkt.

2. Parallelogrammtragarm nach Anspruch 1, bei dem das Stellmittel (33 bis 36) mit einer Verzahnung versehen ist, die mit der Verzahnung eines kraftabhängig lösbaren Gesperres (38) in Eingriff steht.

3. Parallelogrammtragarm nach Anspruch 2, bei dem ein durch Reibung kraftschlüssig arbeitendes Gesperre (38) vorhanden ist, wobei Reibkraft und Antriebsmoment so bemessen sind, daß der Parallelogrammtragarm sowohl motorisch als auch von Hand verstellbar ist.

4. Parallelogrammtragarm nach Anspruch 3, bei dem in einem Führungsgehäuse (25, 26) eine Druckfeder (27) angeordnet ist, deren eines Ende sich an dem Gehäuse zugeordneten Stellmitteln (28, 29) abstützt und deren anderes Ende an einem im einen Parallelogrammtragarm angeordneten und im Führungsgehäuse (25, 26) geführten Widerlager (30) anliegt, bei dem weiterhin im Führungsgehäuse ein mit einer Rutschkupplung (40, 41) gekuppeltes Schneckenrad (39) drehbar gelagert ist, welches mit einer mit dem Antrieb (34) verbundenen Schnecke (33) in Eingriff steht.

5. Parallelogrammtragarm nach Anspruch 4, bei dem die Druckfeder (27) an im Führungsgehäuse (25, 26) lageveränderbar angeordneten Stellmitteln (28, 29) anliegt.

6. Parallelogrammtragarm nach Anspruch 4, bei dem die Rutschkupplung durch seitlich an den Flächen des Schnekkenrades (39) anliegende, deren Drehbarkeit hemmende Scheiben (40, 41) gebildet ist.

7. Parallelogrammtragarm nach Anspruch 4, bei dem das Führungsgehäuse (25, 26) aus zwei durch Längsteilung gebildeten Hälften besteht.

8. Parallelogrammtragarm nach einem der Ansprüche 1 bis 7, der zur höhenverstellbaren Halterung eines zahnärztlichen Gerätes (1) dient und der zu diesem Zweck mit seinem bodenseitigen Ende an einem Basisteil (3) angelenkt ist und an dessen anderem Ende das Gerät (1) gehaltert ist, wobei die Anordnung so getroffen ist, daß der Parallelogrammtragarm von einer oberen Endstellung, in der er im wesentlichen senkrecht steht, in eine demgegenüber geneigte untere Endstellung verstellbar ist, und wobei ferner innerhalb der durch die bodenseitige Gelenkanordnung (7, 7', 8, 8') des Parallelogrammtragarmes (3) gegebenen Umrisse im wesentlichen zentrisch ein Schwenklager mit vertikaler Achslagerung (13) angeordnet ist.

9. Parallelogrammtragarm nach Anspruch 8, bei dem das bodenseitige Ende des Parallelogrammtragarmes von einem ersten Anschlußteil (11) aufgenommen wird, welches das Schwenklager mit der vertikalen Achslagerung (13) enthält und das geräteseitige Ende von einem zweiten Anschlußteil (12) aufgenommen wird, an dem das Gerät (1) um eine weitere vertikale Achslagerung (14) schwenkbar gehaltert ist.

10. Parallelogrammtragarm nach Anspruch 9, bei dem die beiden Anschlußteile (11, 12) ein kugelkalottenförmiges Gehäuse (21, 22) aufweisen, denen ein dazu passendes rohrförmiges, die Tragarmkonstruktion verkleidendes Gehäuse (23, 24) zugeordnet ist.

11. Parallelogrammtragarm nach Anspruch 10, bei dem das Verkleidungsgehäuse (23, 24) aus zwei durch Längsteilung gebildeten Hälften besteht.

12. Parallelogrammtragarm nach Anspruch 11, bei dem die Hälften (23,24) konisch geformte Halbschalen sind.

13. Parallelogrammtragarm nach Anspruch 9, bei dem die beiden Anschlußteile (11,12) steuerbare Antriebe (18,19) enthalten.

14. Parallelogrammtragarm nach einem der Ansprüche 1 bis 13, bei dem der Hub und der Drehwinkel des Parallelogrammtragarmes durch Anschlagmittel (54 bis 56) begrenzt sind.

15. Parallelogrammtragarm nach Anspruch 9, bei dem die beiden Anschlußteile (11, 12) Zapfen (48) aufweisen, welche mittels Lager (47) im Basisteil (3) bzw. im Gerät (1) gelagert sind, und bei dem auf den Zapfen (48) durch Reibkraft gebremste Zahnräder (49) drehbar aufgesetzt sind, welche mit Antriebsritzeln (50) von Stellmotoren (18, 19) in Eingriff stehen.

16. Parallelogrammtragarm nach Anspruch 15, bei dem eine Steuerscheibe (53) vorhanden ist, die eine Steuerkurve (56) aufweist, gegen die ein am Parallelogrammtragarm befestigter Steuerzapfen (54) aufläuft, wobei die Steuerkurve (56) so ausgelegt ist, daß damit eine Begrenzung des Schwenkwinkels des Parallelogrammtragarmes in Abhängigkeit von der Höhenverstellung erzielt wird.

17. Parallelogrammtragarm nach Anspruch 9, bei dem die beiden Anschlußteile (11,12) baugleich ausgebildet sind.

18. Parallelogrammtragarm nach einem der Ansprüche 9 bis 16, bei dem die Anlenkstelle 17, 17') für das Führungsgehäuse (15) außerhalb der durch die Gelenkanordnung (7, 8, 7', 8') des Tragarmes gegebenen Umrisse am Anschlußteil (11) angeordnet ist.

## Claims

1. Parallelogram supporting arm, having spring equilibration, in which a motor-driven actuating means (33 to 36) acts on the spring (27).

2. Parallelogram supporting arm according to claim 1, in which the actuating means (33 to 36) is provided with a gear-tooth system that engages with the gear-tooth system of a locking mechanism (38) which can be released in dependence upon force.

3. Parallelogram supporting arm according to claim 2, in which there is a locking mechanism (38) operating in a non-positive manner by means of friction, wherein the friction force and the driving torque are designed so that the parallelogram supporting arm can be adjusted both by means of the motor and by hand.

4. Parallelogram supporting arm according to claim 3, in which a pressure spring (27) is arranged in a guide housing (25, 26), with one end of this pressure spring being supported against actuating means (28, 29) assigned to the housing, and with the other end of this pressure spring resting against an abutment (30) arranged in one parallelogram supporting arm and guided in the guide housing (25, 26), and in which, furthermore, in the guide housing, a worm wheel (39), which engages with a worm (33) connected to the drive (34), is mounted for rotation and is coupled to a slipping clutch (40, 41).

5. Parallelogram supporting arm according to claim 4, in which the pressure spring (27) rests against actuating means (28, 29) arranged for changes of position in the guide housing (25, 26).

6. Parallelogram supporting arm according to claim 4, in which the slipping clutch is formed by discs (40, 41) which rest laterally against the surfaces of the worm wheel (39), checking its turning capacity.

7. Parallelogram supporting arm according to claim 4, in which the guide housing (25, 26) consists of two halves formed by longitudinal division.

8. Parallelogram supporting arm according to one of claims 1 to 7, which serves for the vertically adjustable mounting support of a dental device (1), and which, for this purpose, is coupled by its base end to a base part (3), the device (1) being mounted at its other end, wherein the arrangement is such that the parallelogram supporting arm can be adjusted from an upper end position, in which it is substantially vertically upright, to a contrasting, slanting, lower end position, and wherein, furthermore, a swivel bearing having a vertical shaft bearing assembly (13) is arranged substantially centrally within the outlines provided by the articulated arrangement (7, 7', 8, 8') of the parallelogram supporting arm (3) on the base side.

9. Parallelogram supporting arm according to claim 8, in which the end of the parallelogram supporting arm on the base side is received by a first connecting part (11) which comprises the swivel bearing having the vertical shaft bearing assembly (13), and the end of the parallelogram supporting arm on the device side is received by a second connecting part (12) on which the device (1) is mounted for swivelling around a further vertical shaft bearing assembly (14).

10. Parallelogram supporting arm according to claim 9, in which the two connecting parts (11, 12) have a housing (21, 22) in the shape of a universal ball joint to which there is assigned a tubular housing (23, 24) which fits the housing (21, 22) and covers the supporting arm structure.

11. Parallelogram supporting arm according to claim 10, in which the covering housing (23, 24) consists of two halves formed by longitudinal division.

12. Parallelogram supporting arm according to claim 11, in which the halves (23, 24) have tapered half shells.

13. Parallelogram supporting arm according to claim 9, in which the two connecting parts (11, 12) comprise controllable drives (18, 19).

14. Parallelogram supporting arm according to one of claims 1 to 13, in which the lifting and the angle of rotation of the parallelogram supporting arm is limited by stop means (54 to 56).

15. Parallelogram supporting arm according to claim 9, in which the two connecting parts (11, 12) have journals (48) that are mounted by means of bearings (47) in the base part (3) or in the device (1), and in which toothed wheels (49), which are braked by friction and which engage with driving pinions (50) of servomotors (18, 19), are placed on the journal (48) in a rotatable manner.

16. Parallelogram supporting arm according to claim 15, in which there is a plate cam (53) which has a cam disc (56) against which a control journal (54) runs up, this control journal being secured to the parallelogram supporting arm, wherein the cam disc (56) is designed so that, by this means, a limiting of the swivelling angle of the parallelogram supporting arm is achieved in dependence upon the vertical adjustment.

17. Parallelogram supporting arm according to claim 9, in which the two connecting parts (11, 12) are formed in a structurally identical manner.

18. Parallelogram supporting arm according to one of claims 9 to 16, in which the pivot point (17, 17') for the guide housing (15) is arranged on the connecting part (11), outside the outlines provided by articulated arrangement (7, 8, 7', 8') of the supporting arm.

## Revendications

1. Bras de support en forme de parallélogramme comportant un système de compensation de poids à ressort, dans lequel des moyens de réglage (33 à 36), entraînés par un moteur, agissent sur le ressort (27).

2. Bras de support en forme de parallélogramme suivant la revendication 1, dans lequel les moyens de réglage (33 à 36) sont pourvus d'une denture qui engrène avec la denture d'un dispositif de verrouillage (38) pouvant être dégagé en fonction d'une force.

3. Bras de support en forme de parallélogramme suivant la revendication 2, dans lequel est prévu un dispositif de verrouillage (38) qui opère selon une liaison de transmission de force par friction, la force de friction et le moment d'entraînement étant dimensionnés de manière que le bras de support en forme de parallélogramme puisse être déplacé aussi bien par un moteur que manuellement.

4. Bras de support en forme de parallélogramme suivant la revendication 3, dans lequel à l'intérieur d'un boîtier de guidage (25,26) est disposé un ressort de_pression (27), dont une extrémité prend appui sur des moyens de réglage (28,29) associés au boîtier et dont l'autre extrémité s'applique contre une butée (30) qui est disposée dans un bras du support en forme de parallélogramme et est guidée dans le boîtier de guidage (25,26), et dans lequel, en outre, dans le boîtier de guidage est montée, de manière à pouvoir tourner, une roue à vis sans fin (39) accouplée à un accouplement à friction (40,41) et qui engrène avec une vis sans fin (33) reliée au dispositif d'entraînement (34).

5. Bras de support en forme de parallélogramme suivant la revendication 4, dans lequel le ressort de pression s'applique contre des moyens de réglage (28,29) disposés, de manière qu'on puisse en modifier la position, dans le boîtier de guidage (25,26).

6. Bras de support en forme de parallélogramme suivant la revendication 4, dans lequel l'accouplement à friction est formé par des disques (40,41), qui s'appliquent latéralement contre les surfaces de la roue à vis sans fin (39) et qui bloquent toute possibilité de rotation de ces surfaces.

7. Bras de support en forme de parallélogramme suivant la revendication 4, dans lequel le boîtier de guidage (25,26) est constitué de deux moitiés formées par division longitudinale.

8. Bras de support en forme de parallélogramme suivant l'une des revendications 1 à 7, qui sert à retenir, avec possibilité de réglage en hauteur, un appareil de dentisterie (1) et qui, à cet effet, est articulé par son extrémité, située côté fond, à une partie de base (3) et sur l'autre extrémité duquel l'appareil (1) est retenu, l'agencement étant tel que le bras de support en forme de parallélogramme peut être amené d'une position d'extrémité supérieure, dans laquelle il est essentiellement vertical, dans une position d'extrémité inférieure inclinée par rapport à la précédente, tandis, qu'en outre, un palier pivotant possédant un tourillonnage d'axe vertical (13) est disposé d'une manière essentiellement centrée à l'intérieur des contours délimités par le dispositif d'articulation (7,7',8,8'), situé côté sol, du bras de support en forme de parallélogramme (3).

9. Bras de support en forme de parallélogramme suivant la revendication 8, dans lequel l'extrémité, située côté sol, du bras de support en forme de parallélogramme est logée dans une première partie de raccordement (11), qui contient le palier pivotant possédant un tourillonnage d'axe vertical (13) et que l'extrémité, située côté appareil, est logée dans une seconde partie de raccordement (12), sur laquelle l'appareil (1) est monté de manière à pouvoir pivoter autour d'un autre tourillonnage d'axe vertical (14).

10. Bras de support en forme de parallélogramme suivant la revendication 9, dans lequel les deux parties de raccordement (11,12) possèdent un boîtier (21,22) en forme de calotte sphérique, auquel est associé un boîtier tubulaire (23,24), qui y est adapté et habille la structure du bras de support.

11. Bras de support en forme de parallélogramme suivant la revendication 10, dans lequel le boîtier d'habillage (23,24) est constitué par deux moitiés formées par division longitudinale.

12. Bras de support en forme de parallélogramme suivant la revendication 11, dans lequel les moitiés (23,24) sont des demi-coques de forme conique.

13. Bras de support en forme de parallélogramme suivant la revendication 9, dans lequel les deux parties de raccordement (11,12) contiennent des dispositifs d'entraînement commandables (18,19).

14. Bras de support en forme de parallélogramme suivant l'une des revendications 11 à 13, dans lequel la course et l'angle de rotation du bras de support en forme de parallélogramme sont limités par des moyens de butée (54 à 56).

15. Bras de support en forme de parallélogramme suivant la revendication 9, dans lequel les deux parties de raccordement (11,12) comportent des tiges (48) qui sont supportées au moyen de paliers (47) dans la partie de base (3) et dans l'appareil (1), et dans lequel, sur la tige (48), sont montés, de manière à pouvoir tourner, des pignons (49) qui sont freinés par une force de friction et engrènent avec des pignons d'entraînement (50) de servomoteurs (18,19).

16. Bras de support en forme de parallélogramme suivant la revendication 15, dans lequel il est prévu un disque de commande (53), qui possède une came de commande (56), sur laquelle se déplace une broche de commande (54), qui est fixée sur le bras de support en forme de parallélogramme, la came de commande (56) étant agencée de telle sorte qu'il en résulte une limitation de l'angle de pivotement du bras de support en forme de parallélogramme en fonction du réglage en hauteur.

17. Bras de support en forme de parallélogramme suivant la revendication 9, dans lequel les deux parties de raccordement (11,12) sont agencées de façon identique.

18. Bras de support en forme de parallélogramme suivant l'une des revendications 9 à 16, dans lequel le point d'articulation (17,17') pour le boîtier de guidage (15) est disposé sur la partie de raccordement (11) à l'extérieur des contours déterminés par le dispositif d'articulation (7,8, 7',8') du bras de support.
